# EUROPEAN PATENT APPLICATION

(11) **EP 3 674 383 A1**
(43) Date of publication of application: **01.07.2020**
(21) Application number: 18248132.5
(22) Date of filing: 28.12.2018
(51) Int. Cl.: C10J 3/84, C10J 3/86, C10K 1/32, C02F 1/28

(54) **A BIOMASS GASIFICATION SYSTEM**

(71) Applicant: Meva Energy AB, 422 46 Hisings Backa (SE)
(72) Inventor: WINGREN, Anders, 245 63 HJÄRUP (SE)
(74) Representative: AWA Sweden AB

(57) **Abstract**

The present invention relates to a biomass gasification system providing tar and biochar and to a method wherein tars are fixed to the biochar surface. The present invention also relates to use of said system.

## Description

### Technical Field of the Invention

The present invention relates to a biomass gasification system and also a method for combining water streams enabling biochar (also known as charcoal) to clean remains of tar in said system. The invention also provides use of a system set out above for minimizing usage of water at the same time enabling biochar to adsorb tar.

### Background of the Invention

When it comes to biochar handling, there are often several problems to overcome. Gasification of biomass generates syngas, tar and charcoal. The tar, normally leaves the reactor with the syngas whereas the charcoal is collected at the bottom of the reactor. Typically charcoal, often also referred to as ash, is recovered either by a wet system or in a dry system. In a wet ash system the ashes may be soaked in water and thereafter pumped to the a filter and the purified water recycled. In a dry ash system the ashes may be recovered directly, typically through a rotary valve. The main advantage of the wet system compared to the dry system is the fact that the hot charcoal is cooled by mixing with water. Any spontaneous fires which may occur when the charcoal is exposed to oxygen are avoided. Mixing with water also prevents dust. The main drawback with the wet system is a higher transportation cost to landfill or final customer and a fresh water requirement. In a gasification process the charcoal production further depends on a number of parameters such as gasification temperature, gasification type (e.g. updraft, downdraft, entrained flow) type of biomass and its reactivity, ash content of fuel, gasification media (e.g. air, oxygen, steam).

When it comes to gas cleaning, there are often several problems to overcome. The hot syngas leaving the gasifiers contains tars and gas cleaning and cooling is normally required before the syngas can be used in applications such as fuel for internal combustion engines or as replacement for other fuels in industrial combustion process. In a water-based cleaning process the gas can be cooled by evaporative quenching and further cooled and cleaned in a series of scrubbers. When the gas is cooled by water it is condensed and the lowest temperature determines the quantity of condensate. Typically the water in the gas cleaning system is purified and reused. However since water is continuously introduced to the system by the fuel and due to the fact that water is produced in the gasifier there may be a surplus that has to be bled off and being disposed of. The surplus depends mainly on the moisture content of the fuel and on the lowest temperature in the gas cleaning step. The excess water also contains tar compounds such as phenols, BTX, naphthalene etc. and has to be treated before being disposed off.

Therefore, there is a need for system which solves or at least mitigates one or more of the problems set out above.

### Summary of the Invention

The present invention solves one or more of the problems set out above by providing according to a first aspect of the present invention
a biomass gasification system comprising:
a biomass gasification reactor having at least one fuel-inlet for injecting carbonaceous fuel and oxidant into said gasification reactor whereby, in a thermo-chemical reaction, synthesis gas is generated, said synthesis gas having a solid particle content and a tar content;
wherein said gasification reactor further has a syngas exit pipe via which said synthesis gas is extracted from the gasification reactor, and wherein said thermo-chemical reaction in the gasification reactor further also generates hot biochar;
a wet gas cleaning device for receiving the synthesis gas from said syngas exit pipe, said wet gas cleaning device being arranged to direct the synthesis gas through a water mist in order to remove tar from said synthesis gas thereby generating a tar-and-water liquid reject;
a mixer for receiving the hot biochar from the gasification reactor and mixing it with water thereby generating a biochar-and-water mixture;
a separator device for separating said tar-and-water liquid reject into a tar stream and first water stream;
means for conveying said first water stream from said separator device to said mixer thereby exposing any remaining tars in said first water stream to the biochar whereby such tars are fixed to the biochar surface resulting in a cleaning of said first water stream.

Thus the present invention enables adsorbing of tar remains by combining water streams, which enables biochar (also known as charcoal) to remove remains of tar in said system. The remaining tar aggregates with said biochar.

The invention is based on the insight that also biochar from biomass gasification exhibits a high specific area (area/mass). The high specific area enables effective adsorption of various compounds and gives the biochar very good ability to purify water from contamination including such compounds as phenols, BTX and naphthalene. The biochar does in this regard act as active carbon, a well known material to clean liquids.

It should be noted that biomass fuels may be contaminated with chemicals such as paints, glue or impregnation compounds or even naturally contain potentially harmful chemicals which following gasification may appear in the water streams of the gas cleaning system. The present invention is correspondingly applicable for cleaning also of water streams containing such compounds and it is thus not only limited to the cleaning of precisely tars or other aromatic hydrocarbons.

According to a second aspect of the present invention there is also provided a method for gasifying carbonaceous material comprising:
injecting a carbonaceous fuel and oxidant into a gasification reactor whereby, in a thermo-chemical reaction, synthesis gas having tar and a solid particle content is generated and also at the same time, biochar is generated;
extracting said synthesis gas from said gasification reactor;
cooling and scrubbing said synthesis gas such that a tar-and-water liquid reject is formed;
separating said tar-and-water liquid reject into a tar stream and first water stream;
conveying said first water stream and exposing any remaining tars in said first water stream to the biochar whereby such tars are fixed to the biochar surface resulting in a cleaning of said first water stream.

According to a third aspect of the present invention there is also provided use of a system according to the first aspect for minimizing usage of water at the same time enabling biochar to adsorb tar.

It is intended throughout the present description that the expression "biochar" embraces any biochar which could be used in the context of the present invention. The expressions "char coal", "ash" and "biochar" are used interchangebly in this context but indicates the same. Thus biochar may e.g. be ash or charcoal. Biochar is a solid compound which typically is rich in carbon but also contains minerals such as calciumcarbonate and potash. The high amounts of carbon in the biochar separates it from the ashes resulting from complete combustion of biomass which exhibits only very small amounts of carbon remains. Biochar resulting from pyrolysis and/or gasification exhibits high specific area.

It is intended throughout the present description that the expression "synthesis gas " embraces any synthesis gas which could be used in the context of the present invention. The expressions "synthesis gas" and "syngas" are used interchangebly in this context but indicates the same. Thus synthesis gas may e.g. syngas.

It is intended throughout the present description that the expression "wet gas cleaning device" embraces any wet gas cleaning device which could be used in the context of the present invention. Non-limiting examples of such devices are quenchers and scrubbers. Quenchers, in addition to the cleaning effect, also have a cooling effect.

The separator device for separating said tar-and-water liquid reject into a tar stream and first water stream may be a sedimentation vessel, which is preferred, a centrifuge (less preferred) or a filter (least preferred).

According to a preferred embodiment of the first aspect said separator device for separating said tar-and-water liquid reject is a sedimentation vessel, centrifuge or a filter, preferably a sedimentation vessel.

According to a preferred embodiment of the first aspect said mixer comprises a second separator device for providing a biochar-and-water liquid reject and a dewatered biochar, which thus results in a dewatered biochar (charcoal). Said device may be a filter (movable or static) or a sedimentation vessel. Preferably said device is a filter. Said mixer further preferably comprises an inlet to enable the tar-containing first water stream to encounter dewatered biochar (charcoal). According to another preferred embodiment of the first aspect, said mixer is providing the tar-containing first water stream as a cooling water for the hot biochar, whereby the contact between the water and biochar also has the effect that the tar-containing first water stream also is being cleaned from tars and/or other contaminants.

According to a preferred embodiment of the first aspect said mixer comprises device for providing a biochar-and-water liquid reject and a device for separating said tar-and-water liquid reject, preferably a sedimentation vessel.

According to a preferred embodiment of the first aspect said carbonaceous fuel has a particle size of max 3 mm and wherein said biomass gasification reactor is adapted to accept fuel with such small particle size, thereby providing a correspondingly finely divided biochar for cleaning of said first water stream. This usage of a fine fraction fuel as set out above provides a biochar which in practice will be smaller but will be within the range of 0-3 mm. In practice this means that the biomass gasification system preferably is of entrained flow type, as that is a type of biomass gasification principle has a high acceptance for fine fraction fuel. One particularly suitable reactor type is the cyclone reactor type which enables gasification of large amounts of biomass.

The biochar thus will be present in a fine fraction format, i.e. as a course powder when a fine fraction fuel as set out above is used in the biomass gasification system according to the first aspect. This gives an advantage as the water flow which is to be cleaned will be in a better contact with the biochar when in powder form in comparison if it would have been present in larger chunks. If such chunks would have been present, the water would have run through quickly with a less amount of contact. Thus the system according to the first aspect is especially useful in this context as the biochar is obtained in a fine fraction format, and accordingly subsequent treatment steps may be avoided (before said biochar is exposed to the dirty water) such as grinding or crushing, for dividing said biochar as it is already available in a suitable format as set out above. A grinder or similar equipment might otherwise have been a necessary component in a system in this context. Thus it is an advantage that the biochar does not need to be further conditioned before being exposed to the dirty water.

According to a preferred embodiment of the first aspect said wet gas cleaning device is a quencher. One or more scrubbers may further be connected subsequently in sequence with said quencher.

According to a preferred embodiment of the second aspect said biochar is mixed with water creating a biochar and water mixture, whereupon said biochar is separated from said biochar and water mixture providing a dewatered biochar, and exposing said remaining tars with said dewatered biochar.

### Brief description of the drawings

For exemplifying purposes, the invention will be described in closer detail in the following with reference to embodiments thereof illustrated in the attached drawings, wherein:
Figures 1 and 2 disclose previous systems.
Figures 3 and 4 disclose gasification systems in accordance with embodiments of the present invention as set out in the first aspect.

### Detailed description of the invention

In the following, non-limiting examples there is disclosed how the biomass gasification system may be made and the usage thereof.

### Examples

In the following, embodiments of the present invention will be discussed with reference to the accompanying figures. It should be noted that this detailed description by no means limits the scope of the invention. The scope of the invention is defined by the appended claims. Further, that specific features are mentioned in connection to an embodiment of the invention does not mean that those features cannot be used to an advantage together with other embodiments of the invention.

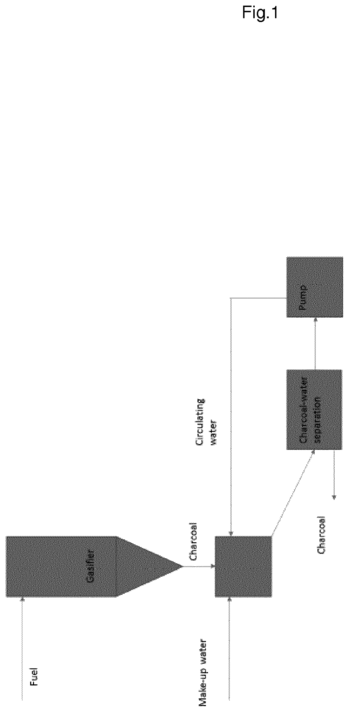

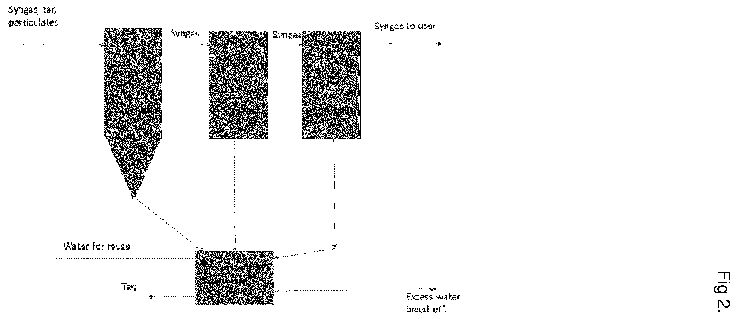

Figure 1 and Figure 2 disclose previous systems.

In figure 1 the following figures/flows may be used:
Fuel: 1000 kg dry/h
Circulating water: about 20 m3/h
Charcoal: 10-50 kg dry/h, 40-200 kg/wet

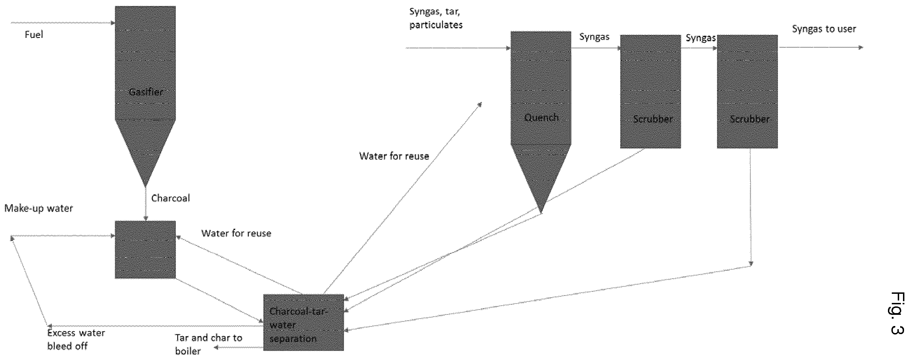

Figure 3 discloses one exemplary embodiment of the present invention that combines the tar and water separation system and the charcoal (biochar) handling. In said figure 3 the charcoal and the tar water separation units are combined. This reduces capex, reduces fresh water demand as well as the amount of excess water that must be bled off. In addition to the mixing of charcoal with tar laden process water improves the tar water separation (tar components will adsorb to the charcoal e.g. the charcoal acts as an activated carbon).

In figure 3 the following flow may be used:
Fuel: 1000 kg dry/h

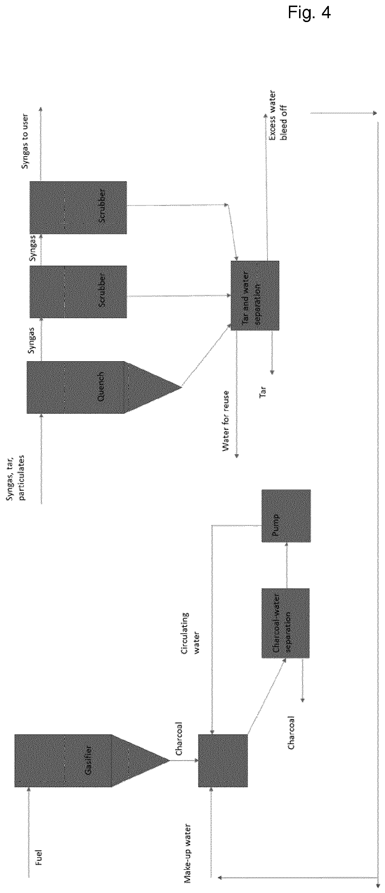

Figure 4 discloses a second exemplary embodiment wherein you use the excess water bled off as make up water in the charcoal handling system. This will reduce the excess water bleed off.

In figure 4 the following figures/flows may be used:
Fuel: 1000 kg dry/h
Circulating water: about 20 m3/h
Charcoal: 10-50 kg dry/h, 40-200 kg/wet

Preferred features of each aspect of the invention are as for each of the other aspects mutatis mutandis.

## Claims

1. A biomass gasification system comprising:
a biomass gasification reactor having at least one fuel-inlet for injecting carbonaceous fuel and oxidant into said gasification reactor whereby, in a thermo-chemical reaction, synthesis gas is generated, said synthesis gas having a solid particle content and a tar content;
wherein said gasification reactor further has a syngas exit pipe via which said synthesis gas is extracted from the gasification reactor, and wherein said thermo-chemical reaction in the gasification reactor further also generates hot biochar;
a wet gas cleaning device for receiving the synthesis gas from said syngas exit pipe, said wet gas cleaning device being arranged to direct the synthesis gas through a water mist in order to remove tar from said synthesis gas thereby generating a tar-and-water liquid reject;
a mixer for receiving the hot biochar from the gasification reactor and mixing it with water thereby generating a biochar-and-water mixture;
a separator device for separating said tar-and-water liquid reject into a tar stream and first water stream;
means for conveying said first water stream from said separator device to said mixer thereby exposing any remaining tars in said first water stream to the biochar whereby such tars are fixed to the biochar surface resulting in a cleaning of said first water stream.

2. The gasification system according to claim 1, wherein said separator device for separating said tar-and-water liquid reject is a sedimentation vessel, centrifuge or a filter, preferably a sedimentation vessel.

3. The gasification system according to claim 1, wherein said mixer comprises a second separator device for providing a biochar-and-water liquid reject and a dewatered biochar.

4. The gasification system according to claim 1, wherein said carbonaceous fuel has a particle size of max 3 mm and wherein said biomass gasification reactor is adapted to accept fuel with such small particle size, thereby providing a correspondingly finely divided biochar for cleaning of said first water stream.

5. The gasification system according to claim 3, wherein said separator device for providing a biochar-and-water liquid reject is a filter or a sedimentation vessel, preferably a filter.

6. The gasification system according to claim 3, wherein said mixer comprises a device for separating said tar-and-water liquid reject, preferably a sedimentation vessel.

7. The gasification system according to claim 3, wherein said mixer comprises an inlet to enable the tar-containing first water stream to encounter dewatered biochar

8. The gasification system according to claim 1, wherein said wet gas cleaning device is a quencher.

9. A method for gasifying carbonaceous material comprising:
injecting a carbonaceous fuel and oxidant into a gasification reactor whereby, in a thermo-chemical reaction, synthesis gas having tar and a solid particle content is generated and also at the same time, biochar is generated;
extracting said synthesis gas from said gasification reactor;
cooling and scrubbing said synthesis gas such that a tar-and-water liquid reject is formed;
separating said tar-and-water liquid reject into a tar stream and a first water stream;
conveying said first water stream and exposing any remaining tars in said first water stream to the biochar whereby such tars are fixed to the biochar surface resulting in a cleaning of said first water stream.

10. The method according to claim 9 wherein said biochar is mixed with water creating a biochar and water mixture, whereupon said biochar is separated from said biochar and water mixture, providing a dewatered biochar, and exposing said remaining tars with said dewatered biochar.

11. Use a system according to any one of the preceding claims 1 - 8, for minimizing usage of water at the same time enabling biochar to adsorb tar.
